# EUROPEAN PATENT APPLICATION

(11) **EP 4 329 363 A1**
(43) Date of publication of application: **28.02.2024**
(21) Application number: 22811466.6
(22) Date of filing: 30.03.2022
(51) Int. Cl.: H04W 24/10, H04W 52/02

(54) **ELECTRONIC DEVICE FOR REDUCING POWER CONSUMPTION DUE TO MEASUREMENT, AND OPERATION METHOD OF SAME**

(30) Priority: 25.05.2021 KR 20210066665
(71) Applicant: Samsung Electronics Co., Ltd., Suwon-si, Gyeonggi-do 16677 (KR)
(72) Inventor: KIM, Sangwon, Suwon-si Gyeonggi-do 16677 (KR)
(74) Representative: Arnold & Siedsma
(86) International application number: PCT/KR2022/004535
(87) International publication number: WO 2022/250273

(57) **Abstract**

Various embodiments of the present invention relate to a device and method for reducing power consumption for measurement in an electronic device. The electronic device comprises a communication circuit and a processor operatively connected to the communication circuit, wherein the processor may: confirm, in a control message received from an external device via the communication circuit, a measurement period in an RRC inactivate state or an RRC standby state; confirm the operation mode of the electronic device; and update the measurement period if the operation mode of the electronic device is determined to be an inactive mode. Various other embodiments are also possible.

## Description

### [Technical Field]

Various embodiments of the disclosure relate to an apparatus and a method for reducing power consumption for measurement by an electronic device.

### [Background Art]

With the development of wireless communication technology, electronic devices (for example, electronic devices for communication) are commonly used in daily life, and thus, demand for wireless data traffic is increasing. Communication systems (for example, 5^{th} generation (5G), pre-5G communication system, or new radio (NR)) for transmitting and/or receiving signals using a frequency in high-frequency bands (for example, mmWave or bands from about 3 GHz to about 300 GHz) are being researched to meet wireless data traffic demand increasing after the commercialization of the 4^{th} generation (4G) communication system (for example, long-term evolution (LTE)).

### [Disclosure of Invention]

### [Technical Problem]

An electronic device may support early measurement reporting to reduce activation delay for dual connectivity (DC) and/or carrier aggregation (CA) scheme. For example, the electronic device may periodically perform measurement in a radio resource control (RRC) inactive state (for example, RRC inactive) or an RRC idle state (for example, RRC idle), based on measurement-related information provided from a network. The electronic device may transmit a measurement result together with a message related to RRC resumption (for example, RRC resume complete) to the network.

However, the electronic device repeatedly perform measurement for early measurement reporting even when there is no data transmission and/or reception for a relatively long time, and thus unnecessary power consumption may increase. Further, the electronic device should execute unnecessary dual connectivity and/or carrier aggregation scheme by early measurement reporting although the electronic device transmits and/or receive relatively small data to and/from the network, and thus unnecessary power consumption may increase.

Various embodiments of the disclosure disclose an apparatus and a method for reducing power consumption due to measurement by the electronic device.

### [Solution to Problem]

According to various embodiments, an electronic device includes a communication circuit and a processor operatively connected to the communication circuit, and the processor may be configured to identify measurement period in a radio resource control (RRC) inactive state or an RRC idle state from a control message received from an external device through the communication circuit, identify an operation mode of the electronic device, and update the measurement period in case that it is determined that the operation mode of the electronic device is an inactive mode.

According to various embodiments, a method of operating an electronic device includes identifying measurement period in a radio resource control (RRC) inactive state or an RRC idle state from a control message received from an external device, identifying an operation mode of the electronic device, and updating the measurement period in case that it is determined that the operation mode of the electronic device is an inactive mode.

### [Advantageous Effects of Invention]

According to various embodiments of the disclosure, an electronic device configures (or updating) measurement period in an RRC inactive state (for example, RRC inactive) and/or an RRC idle state (for example, RRC idle), based on whether the electronic device is used, thereby reducing power consumption due to measurement.

According to various embodiments, it is possible to reduce the unnecessary performance of dual connectivity and/or carrier aggregation scheme by selectively transmitting a measurement result made in the RRC inactive state (for example, RRC inactive) and/or the RRC idle state (for example, RRC idle), based on data throughput required by an application program (or function) executed in the electronic device.

### [Brief Description of Drawings]

FIG. 1 is a block diagram of an electronic device within a network environment according to various embodiments.
FIG. 2 is a block diagram of an electronic device for measurement according to various embodiments.
FIG. 3 is a flowchart illustrating a process in which an electronic device updates measurement period according to various embodiments.
FIG. 4A is an example of measurement period of an electronic device according to various embodiments.
FIG. 4B is another example of the measurement period of the electronic device according to various embodiments.
FIG. 5 is a flowchart illustrating a process in which an electronic device updates measurement period, based on a predetermined expansion interval according to various embodiments.
FIG. 6 is a flowchart illustrating a process in which an electronic device updates measurement period, based on switching to an inactive mode according to various embodiments.
FIG. 7 is a flowchart illustrating a process in which an electronic device selectively transmits a measurement result according to various embodiments.
FIG. 8 is a flowchart illustrating a process in which an electronic device transmits a measurement result according to various embodiments.

### [Mode for the Invention]

Hereinafter, various embodiments are described in detail with reference to the accompanying drawings.

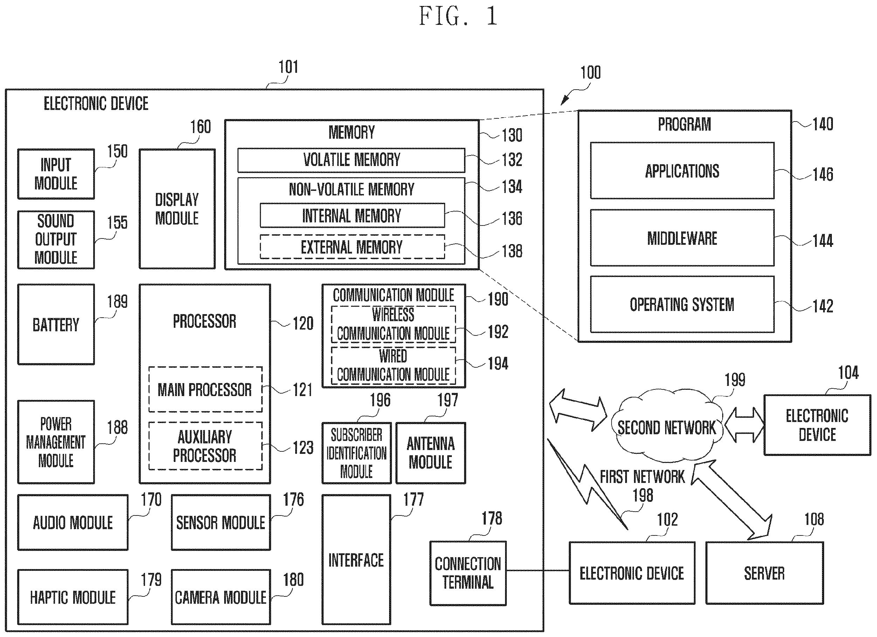

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC. According to an embodiment, the subscriber identification module 196 may include a plurality of subscriber identification modules. For example, the plurality of subscriber identification modules may store different subscriber information.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include a patch array antenna and/or a dipole array antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

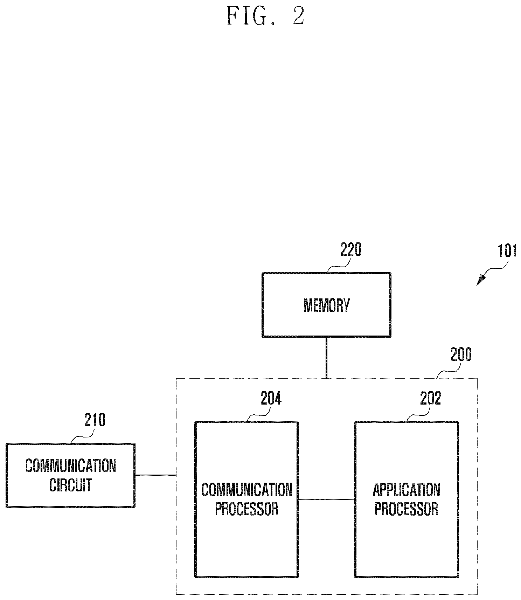

FIG. 2 is a block diagram of an electronic device for measurement according to various embodiments. According to an embodiment, the electronic device 101 of FIG. 2 may be at least partially similar to the electronic device 101 of FIG. 1 or may further include other embodiments of the electronic device.

According to various embodiments referring to FIG. 2, the electronic device 101 may include a processor 200, a communication circuit 210, and/or a memory 220. According to an embodiment, the processor 200 may be substantially the same as the processor 120 of FIG. 1 or may be included in the processor 120. The communication circuit 210 may be substantially the same as the wireless communication module 192 of FIG. 1 or may be included in the wireless communication module 192. The memory 220 may be substantially the same as the memory 130 of FIG. 1 or may be included in the memory 130.

According to various embodiments, the processor 200 may control the wireless communication circuit 210 and/or the memory 220 which are operatively connected thereto. According to various embodiments, the processor 200 may include an application processor (AP) 202 and/or a communication processor (CP) 204.

According to various embodiments, the processor 200 may identify information related to measurement in an RRC inactive state (for example, RRC inactive) or an RRC idle state (for example, RRC idle). According to an embodiment, the communication processor 204 may identify information on measurement (for example, measIdleConfig) in a message related to RRC release (for example, an RRC release message) received from the network through the communication circuit 210. According to an embodiment, the communication processor 204 may identify information on measurement (for example, measIdleConfig) in system information (for example, a system information block (SIB) 11) received from the network through the communication circuit 210. For example, the information on measurement may include information on first measurement period (or measurement interval or measurement cycle) for measurement in the RRC inactive state or the RRC idle state. For example, the RRC inactive state may include a radio access state in which the electronic device 101 is in a connected state with a core network (CN) associated with the electronic device 101 but the electronic device 101 is in an idle state with a radio access network (RAN). For example, in the RRC inactive state, the network (for example, a base station) and/or the electronic device 101 may maintain context (for example, access stratum (AS) context) related to the electronic device 101. For example, the RRC idle state may include a radio access state in which the electronic device 101 is not RRC-connected with the network. For example, the electronic device 101 may monitor paging related to the electronic device 101 in the RRC inactive state and/or the RRC idle state.

According to various embodiments, the processor 200 may identify an operation mode of the electronic device 101. According to an embodiment, when it is determined that the application processor 202 is in a sleep state, the communication processor 204 may determine that the operation mode of the electronic device 101 is an inactive mode. For example, the communication processor 204 may determine that the application processor 202 is in the sleep state, based on information related to switching to the sleep state received from the application processor 202 through a radio interface layer (RIL). For example, the sleep state of the application processor 202 is a state in which the application processor 202 is not operated and may include a state in which a display (not shown) of the electronic device 101 is deactivated. According to an embodiment, when it is that the display (not shown) of the electronic device 101 is in the inactive state (for example, off), the communication processor 204 may determine that the operation mode of the electronic device 101 is the inactive state. For example, the inactive state of the display may be determined based on state information (or state switching information) of the display received by the communication processor 204 from the application processor 202. For example, the inactive state of the display may include a state in which there is no information displayed on the display since the display is not operated regardless of the operation state (for example, the inactive state or the sleep state) of the application processor 202. According to an embodiment, when it is determined that the application processor 202 is in the active state, the communication processor 204 may determine that the operation mode of the electronic device 101 is the active state. For example, the communication processor 204 may determine that the application processor 202 is in the active state, based on information related to switching to the active state received from the application processor 202 through the RIL. According to an embodiment, when it is determined that the display (not shown) of the electronic device 101 is in the active state (for example, on), the communication processor 204 may determine that the operation mode of the electronic device 101 is the active mode. For example, the active mode of the electronic device 101 may include a state in which the electronic device 101 is being used by the user. For example, the inactive mode of the electronic device 101 may include a state in which the electronic device 101 is not used by the user.

According to various embodiments, the processor 200 may update information related to measurement, based on a paging period of the electronic device 101. According to an embodiment, the communication processor 204 may update first measurement period in the RRC inactive state or the RRC idle state to second measurement period to at least partially overlap the paging period of the electronic device 101. For example, when the paging period of the electronic device 101 is about 1.28 seconds and the first measurement period is about 10 seconds, the communication processor 204 may update the first measurement period to the second measurement period corresponding to about 10.24 seconds (for example, about 1.28 seconds × 8), based on the paging period. For example, the paging period (for example, defaultPagingCycle) may be identified in system information (for example, SIB1) received from the network.

According to various embodiments, the processor 200 may update information related to measurement, based on the operation mode of the electronic device 101. According to an embodiment, when it is determined that the electronic device 101 is in the inactive mode, the communication processor 204 may update (or expand) the first measurement period (or the second measurement period) in the RRC inactive state or the RRC idle state to third measurement period. For example, the third measurement period may include update (or expanded) measurement period to limit measurement in the inactive mode of the electronic device 101. For example, the third measurement period may include measurement period updated (or expanded) based on a predetermined expansion interval. For example, the measurement period updated (or expanded) based on the predetermined expansion interval may be additionally updated (or expanded) at the predetermined expansion interval, based on successive measurement. For example, the predetermined expansion internal is a reference interval for expanding the measurement period and may include a natural number larger than 1 to expand the measurement period.

According to an embodiment, the communication processor 204 may update the first measurement period (or the second measurement period) in the RRC inactive state or the RRC idle state to the third measurement period, based on a time point at which the electronic device 101 switches to the inactive mode. For example, when the electronic device 101 switches to the inactive mode before information related to the measurement in the RRC inactive state or the RRC idle state is identified, the communication processor 204 may update the first measurement period (or the second measurement period) to the third measurement period to limit measurement in the inactive mode of the electronic device 101. For example, when the electronic device 101 switches to the inactive mode after information related to the measurement in the RRC inactive state or the RRC idle state is identified, the communication processor 204 may update the first measurement period (or the second measurement period) to the third measurement period, based on the predetermined expansion interval.

According to various embodiments, the processor 200 may perform measurement in the RRC inactive state or the RRC idle state. According to an embodiment, when the electronic device 101 is in the active state, the communication processor 204 may periodically perform measurement in the RRC inactive state or the RRC idle state, based on the first measurement period. According to embodiment, when the electronic device 101 is in the active mode, the communication processor 204 may periodically perform measurement in the RRC inactive state or the RRC idle state, based on the updated second measurement period based on the paging period of the electronic device 101. According to an embodiment, when the electronic device 101 is in the inactive mode, the communication processor 204 may perform measurement in the RRC inactive state or the RRC idle state, based on the updated third measurement period based on the operation mode of the electronic device 101.

According to various embodiments, the processor 200 may limit transmission of the measurement result, based on data throughput required by an application program (or function) executed by the electronic device 101. According to an embodiment, when data throughput required by the application program (or function) executed by the application processor 202 meets predetermined data throughput, the communication processor 204 may limit transmission of the measurement result. For example, data throughput required by the application program (or function) executed by the application processor 202 may be identified at a time point at which the electronic device 101 switches from the inactive mode to the active mode. For example, when the data throughput required by the application program (or function) executed by the application processor 202 meets predetermined throughput, the measurement period in the RRC inactive state or the RRC idle state may be configured (or maintained) as the third measurement period. For example, the state in which the predetermined throughput is met may include a state in which the data throughput required by the application program (or function) executed by the application processor 202 is equal to or lower than the predetermined throughput. For example, the predetermined throughput may include reference throughput for determining whether to transmit the measurement result.

According to an embodiment, when the data throughput required by the application program (or function) executed by the application processor 202 does not meet the predetermined throughput, the communication processor 204 may control the communication circuit 210 to transmit the measurement result to the network. For example, when receiving a request message related to the measurement result from the network through the communication circuit 210, the communication processor 204 may control the communication circuit 210 to transmit the result measured in the RRC inactive state or the RRC idle state to the network. For example, the result measured in the RRC inactive state or the RRC idle state may include the more recently made measurement result or the measurement result made before a predetermined time from a time point at which the request message is received. For example, when the data throughput required by the application program (or function) executed by the application processor 202 does not meet the predetermined throughput, the measurement period in the RRC inactive state or the RRC idle state may be configured as (or switch to) the first measurement period or the second measurement period. For example, the state in which the predetermined throughput is not met may include the state in which the data throughput required by the application program (or function) executed by the application processor 202 is larger than the predetermined throughput and/or the state in which the data throughput required by the application program (or function) executed by the application processor 202 cannot be identified.

According to various embodiments, the communication circuit 210 may transmit and/or receive signals and/or data to and/or from an external device (for example, the electronic device 104 and/or the server 108 of FIG. 1) through a wireless network. According to an embodiment, the communication circuit 210 may include a radio frequency integrated circuit (RFIC) and a radio frequency front end (RFFE) for communication with the external device. For example, the wireless network may include a 2G network, a 3G network, a 4G network (for example, long-term evolution (LTE)), and/or a 5G network (for example, new radio (NR)).

According to various embodiments, the memory 220 may store various pieces of data used by at least one information element (for example, the processor 200 or the communication circuit 210) of the electronic device 101. According to an embodiment, the memory 220 may store various instructions which can be executed through the processor 212.

According to various embodiments, an electronic device (for example, the electronic device 101 of FIG. 1 or FIG. 2) may include a communication circuit (for example, the wireless communication module 192 of FIG. 1 or the communication circuit 210 of FIG. 2) and a processor (for example, the processor 120 of FIG. 1, or the processor 200 or the communication processor 204 of FIG. 2) operatively connected to the communication circuit, and the processor may be configured to identify measurement period in a radio resource control (RRC) inactive state or an RRC idle state from a control message received from an external device through the communication circuit, identify an operation mode of the electronic device, and update the measurement period in case that it is determined that the operation mode of the electronic device is an inactive mode.

According to various embodiments, the measurement period may be included in a message related to RRC release or a system information block received from the external device through the communication circuit.

According to various embodiments, the electronic device may further include an application processor (for example, the main processor 121 of FIG. 1 or the application processor (AP) 202 of FIG. 2), and the processor may be configured to determine that the operation mode of the electronic device is the inactive mode when the application processor is in a sleep state.

According to various embodiments, the electronic device may further include a display (for example, the display module 160 of FIG. 1), and the processor may be configured to determine that the operation mode of the electronic device is the inactive mode when the display is in an inactive state.

According to various embodiments, when it is determined that the operation mode of the electronic device is the inactive mode, the processor may be configured to update the measurement period to not perform measurement in the inactive mode of the electronic device.

According to various embodiments, the processor may be configured to identify a paging period of the electronic device and update the measurement period to at least partially overlap the paging period.

According to various embodiments, when it is determined that the operation mode of the electronic device is the inactive mode, the processor may be configured to additionally update the measurement period updated to at least partially overlap the paging period, based on a predetermined interval.

According to various embodiments, the processor may be configured to identify data throughput required by an application program executed in the electronic device when the operation mode of the electronic device switches to an active mode, and limit transmission of a measurement result in the RRC inactive state or the RRC idle state when data throughput required by an application program executed in the electronic device meets predetermined throughput.

According to various embodiments, when the data throughput required by the application program executed in the electronic device does not meet the predetermined throughput, the processor may be configured to transmit the measurement result in the RRC inactive state or the RRC idle state to the external device.

According to various embodiments, when it is determined that the operation mode of the electronic device is an active mode, the processor may be configured to periodically perform measurement in the RRC inactive state or the RRC idle state, based on the measurement period.

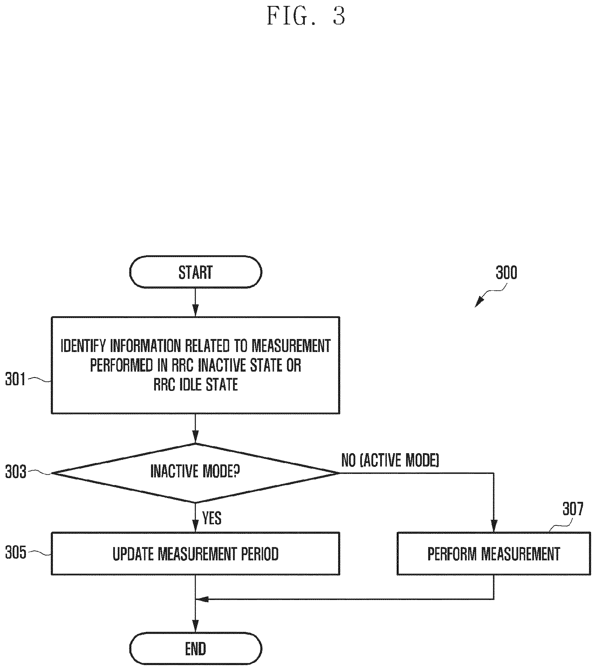

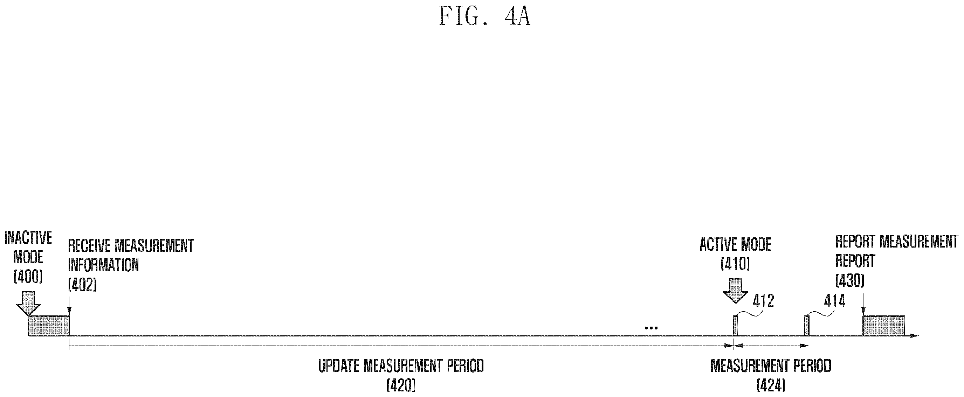

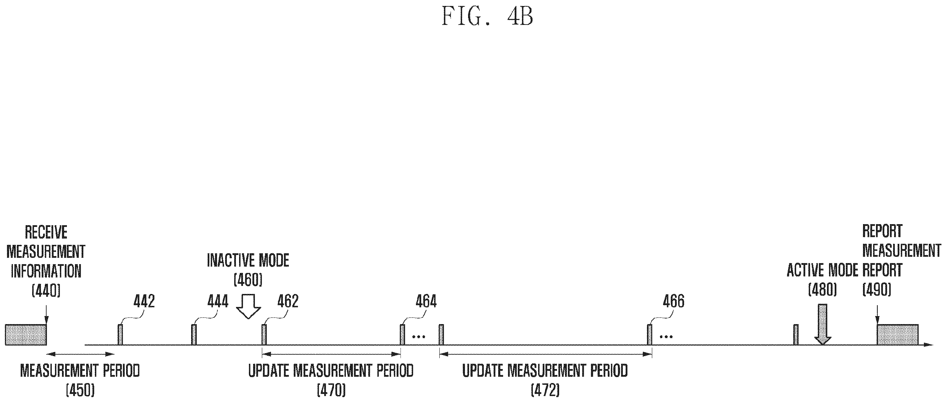

FIG. 3 is a flowchart 300 illustrating a process in which the electronic device updates measurement period according to various embodiments. In the following embodiment, operations may be sequentially performed but the sequential performance is not necessary. For example, the order of operations may be changed, and at least two operations may be performed in parallel. For example, the electronic device of FIG. 3 may be the electronic device 101 of FIG. 1 or FIG. 2. For example, at least some of FIG. 3 may refer to FIG. 4A and/or FIG. 4B. FIG. 4A is an example of measurement period of the electronic device according to various embodiments. FIG. 4B is another example of the measurement period of the electronic device according to various embodiments.

According to various embodiments referring to FIG. 3, the electronic device (For example, the processor 210 of FIG. 1 or the processor 200 of FIG. 2) may identify information on measurement in the RRC inactive state or the RRC idle state in operation 301. According to an embodiment, the communication processor 204 may identify information on measurement (for example, measIdleConfig) in a message related to RRC release (for example, an RRC release message in the TS 38.331 standard) received from the network through the communication circuit 210 as shown in [Table 1] below.

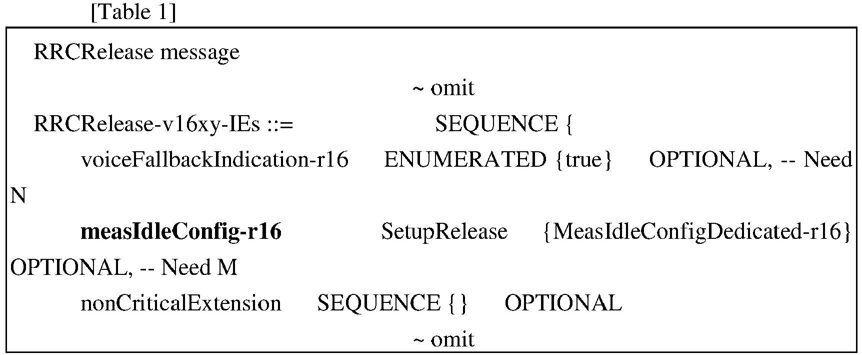

According to an embodiment, the communication processor 204 may identify information (for example, measIdleConfig) on measurement in system information (for example, system information block (SIB) 11 of the TS 38.331 standard) received from the network through the communication circuit 210 as shown in [Table 2] below.

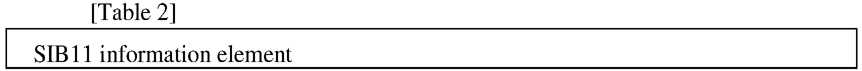

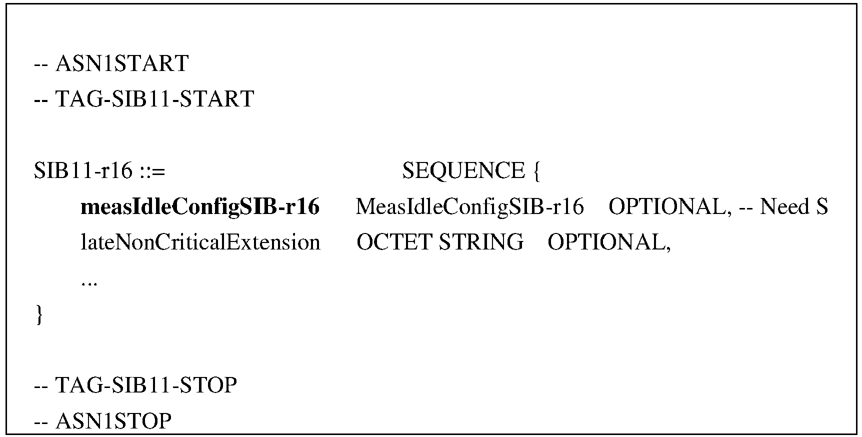

For example, the information on measurement may include information related to first measurement period (measIdleDuration) for performing measurement in the RRC inactive state or the RRC idle state as shown in [Table 3] (for example, MeasIdleConfig in the TS 38.331 standard) below.

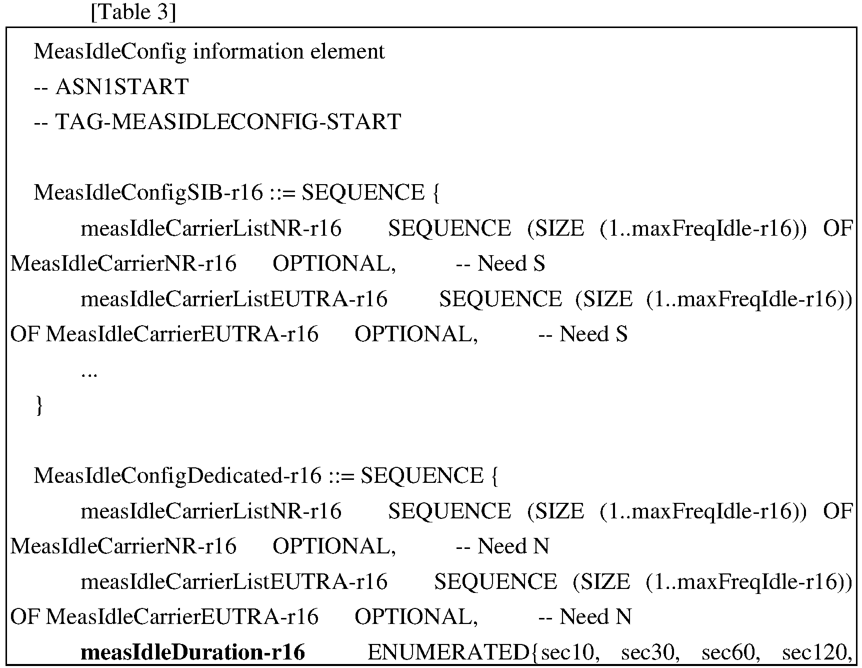

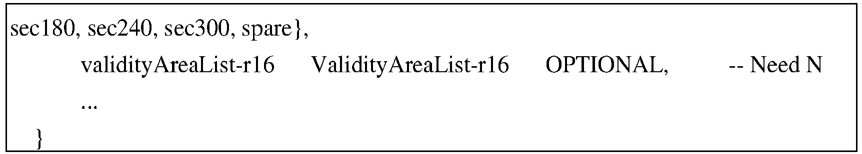

For example, the RRC inactive state may include a radio access state in which the electronic device 101 is in a connected state with a relevant core network (CN) but the electronic device 101 is in an idle state with a relevant radio access network (RAN). For example, in the RRC inactive state, the network (for example, a base station) and/or the electronic device 101 may maintain context (for example, AS context) associated with the electronic device 101. For example, the RRC idle state may include a radio access state in which the electronic device 101 is not RRC-connected with the network. For example, the electronic device 101 may monitor paging related to the electronic device 101 in the RRC inactive state and/or the RRC idle state.

According to various embodiments, the electronic device (for example, the processor 120 or 200) may identify whether the operation mode of the electronic device 101 is the inactive mode in operation 303. According to an embodiment, when the application processor 202 is in the sleep state, the communication processor 204 may determine that the operation mode of the electronic device 101 is the inactive mode. For example, the sleep state of the application processor 202 is a state in which the application processor 202 is not operated and may include a state in which a display (not shown) of the electronic device 101 is deactivated. According to an embodiment, when the display (not shown) of the electronic device 101 is in the inactive state (for example, off), the communication processor 204 may determine that the operation mode of the electronic device 101 is the inactive mode. For example, the inactive state of the display may include a state in which the display is not operated and thus there is no information displayed on the display. For example, the inactive state of the display may include a state in which the display is not operated regardless of the operation state (for example, the active state or the sleep state) of the application processor 202.

According to an embodiment, when the application processor 202 is in the active state, the communication processor 204 may determine that the operation mode of the electronic device 101 is the active state. According to an embodiment, when the display (not shown) of the electronic device 101 is in the active state (for example, on), the communication processor 204 may determine that the operation mode of the electronic device 101 is the active mode. For example, the active mode of the electronic device 101 may include a state in which the electronic device 101 is being used by the user. For example, the inactive mode of the electronic device 101 may include a state in which the electronic device 101 is not used by the user.

According to various embodiments, when the electronic device 101 is in the inactive mode (for example, 'Yes' of operation 303), the electronic device (for example, the processor 120 or 200) may update measurement period in the RRC inactive state or the RRC idle state in operation 305. According to an embodiment, the communication processor 204 may update (or expand) the first measurement period (or the second measurement period) to the third measurement period to limit measurement in the inactive mode of the electronic device 101 as indicated by reference numeral 420 of FIG. 4A. According to an embodiment, the communication processor 204 may update (or expand) the first measurement period to the third measurement period, based on a predetermined expansion interval as indicated by reference numeral 470 of FIG. 4B. For example, when measurement is successively performed, based on the updated third measurement period a predetermined number of times, the communication processor 204 may update (or expand) the measurement period at the predetermined expansion interval as indicated by reference numeral 472. According to an embodiment, the communication processor 204 may perform periodically perform measurement in the RRC inactive state or the RRC idle state, based on the updated third measurement period.

According to various embodiments, when the electronic device 101 is in the active mode (for example, 'No' of operation 303), the electronic device (for example, the processor 120 or 200) may perform measurement in the RRC inactive state or the RRC idle state, based on the first measurement period included in the information on measurement in the RRC inactive state or the RRC idle state in operation 307. According to an embodiment, when the electronic device 101 is in the active mode, the communication processor 204 may periodically perform measurement in the RRC inactive state or the RRC idle state, based on the first measurement period included in the information on measurement in the RRC inactive state or the RRC idle state. According to an embodiment, when the electronic device 101 is in the active mode, the communication processor 204 may periodically perform measurement in the RRC inactive state or the RRC idle state, based on the updated second measurement period (for example, about 10.24 seconds) based on the paging period of the electronic device 101.

According to various embodiments, the electronic device (for example, the processor 120 or 200) may update the measurement period in the RRC inactive state or the RRC idle state, based on a time point at which the electronic device 101 switches to the inactive mode. According to an embodiment, as illustrated in FIG. 4A, when the electronic device 101 switches to the inactive mode before a time point 402 at which the information on measurement in the RRC inactive state or the RRC idle state is received as indicated by reference numeral 400, the electronic device 101 may update the measurement period to limit the measurement in the state corresponding to the inactive mode as indicated by reference numeral 420.

According to an embodiment, as illustrated in FIG. 4B, when the electronic device 101 is in the active mode at a time point 440 at which the information on measurement in the RRC inactive state or the RRC idle state is received, the communication processor 204 may periodically perform measurement in the RRC inactive state or the RRC idle state, based on the first measurement period (or the second measurement period) 450 included in the information on measurement as indicated by reference numerals 442 and 444. According to an embodiment, when the electronic device 101 switches to the inactive mode as indicated by reference numeral 460, the communication processor 204 may update the measurement period in the RRC inactive state or the RRC idle state, based on a predetermined expansion interval as indicated by reference numeral 470. For example, when the electronic device 101 switches to the inactive mode as indicated by reference numeral 460, the communication processor 204 may perform the measurement, based on difference between a time point at which switching to the inactive mode is performed and the first measurement period (or the second measurement period) 450 as indicated by reference numeral 462 and update the measurement period as indicated by reference numeral 470. For example, when the difference between the time point at which switching to the inactive mode is performed and the first measurement period (or the second measurement period) 450 meets a predetermined time interval, the measurement 462 may be performed. For example, when the electronic device 101 switches to the inactive mode as indicated by reference numeral 460, the communication processor 204 may update the measurement period regardless of the first measurement period (or the second measurement period) 450 as indicated by reference numeral 470.

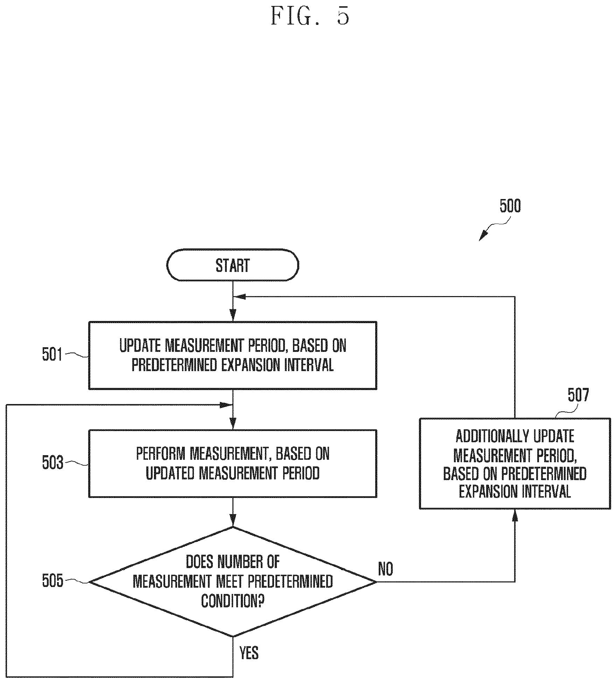

FIG. 5 is a flowchart 500 illustrating a process in which the electronic device updates measurement period, based on a predetermined expansion interval according to various embodiments. According to an embodiment, operations of FIG. 5 may be the detailed operation of operation 305 of FIG. 3. In the following embodiment, operations may be sequentially performed but the sequential performance is not necessary. For example, the order of operations may be changed, and at least two operations may be performed in parallel. For example, the electronic device of FIG. 5 may be the electronic device 101 of FIG. 1 or FIG. 2.

According to various embodiments referring to FIG. 5, when the electronic device 101 is in the inactive mode (for example, `Yes' of operation 303 in FIG. 3), the electronic device (for example, the processor 120 of FIG. 1 or the processor 200 of FIG. 2) may update (or expand) measurement period in the RRC inactive state or the RRC idle state to third measurement period, based on a predetermine expansion interval in operation 501. According to an embodiment, when the electronic device 101 is in the inactive mode, the communication processor 204 may update (or expand) the first measurement period (or the second measurement period) 450 in the RRC inactive state or the RRC idle state to the third measurement period, based on the predetermined expansion interval, as indicated by reference numeral 470 of FIG. 4B.

According to various embodiments, the electronic device (for example, the processor 120 or 200) may periodically perform measurement in the RRC inactive state or the RRC idle state, based on the third measurement period in operation 503. According to an embodiment, the communication processor 204 may periodically perform measurement in the RRC inactive state or the RRC idle state, based on the updated third measurement period 470 based on the predetermined expansion interval as indicated by reference numeral 464 of FIG. 4B.

According to various embodiments, the electronic device (for example, the processor 120 or 200) may identify whether the periodic measurement number in the RRC inactive state or the RRC idle state based on the third measurement period meets a predetermined condition in operation 505. According to an embodiment, the communication processor 204 may identify whether the successive measurement number in the RRC inactive state or the RRC idle state based on the third measurement period 470 meets the predetermined condition.

According to various embodiments, when the periodic measurement number in the RRC inactive state or the RRC idle state based on the third measurement period meets the predetermined condition (for example, `Yes' of operation 505), the electronic device (for example, the processor 120 or 200) may periodically perform measurement in the RRC inactive state or the RRC idle state, based on the third measurement period in operation 503. For example, the state in which the predetermined condition is met may include a state in which the successive measurement number in the RRC inactive state or the RRC idle state based on the third measurement period is smaller than a predetermined number.

According to various embodiments, when the periodic measurement number in the RRC inactive state or the RRC idle state based on the third measurement period does not meet the predetermined condition (for example, 'No' of operation 505), the electronic device (for example, the processor 120 or 200) may additionally update (or expand) the third measurement period in the RRC inactive state or the RRC idle state, based on the predetermined expansion interval in operation 507. According to an embodiment, when the successive measurement number in the RRC inactive state or the RRC idle state based on the third measurement period 470 does not meet the predetermined condition, the communication processor 204 may additionally update the third measurement period 470 in the RRC inactive state or the RRC idle state, based on the predetermined expansion interval as indicated by reference numeral 472. For example, the third measurement period 470 may be additionally expanded based on the predetermined expansion interval as indicated by reference numeral 472. For example, the state in which the predetermined condition is not met may include a state in which the successive measurement number in the RRC inactive state or the RRC idle state based on the third measurement period is larger than or equal to the predetermined number.

According to various embodiments, the electronic device (for example, the processor 120 or 200) may periodically perform measurement in the RRC inactive state or the RRC idle state, based on the additionally updated third measurement period in operation 503.

According to various embodiments, the electronic device (for example, the processor 120 or 200) may periodically perform measurement in the RRC inactive state or the RRC idle state. According to an embodiment, when the electronic device 101 is in the inactive mode, the communication processor 204 may repeatedly perform operation 501 to operation 507 of FIG. 5 in the RRC inactive state or the RRC idle state.

According to various embodiments, the electronic device (for example, the processor 120 or 200) may periodically perform measurement for a predetermined time section in the RRC inactive state or the RRC idle state. For example, the predetermined time section may be configured by the network or based on state information (for example, remaining battery) of the electronic device 101. According to an embodiment, when the electronic device 101 is in the inactive mode, the communication processor 204 may repeatedly perform operation 501 to operation 507 of FIG. 5 for the predetermined time section in the RRC inactive state or the RRC idle state.

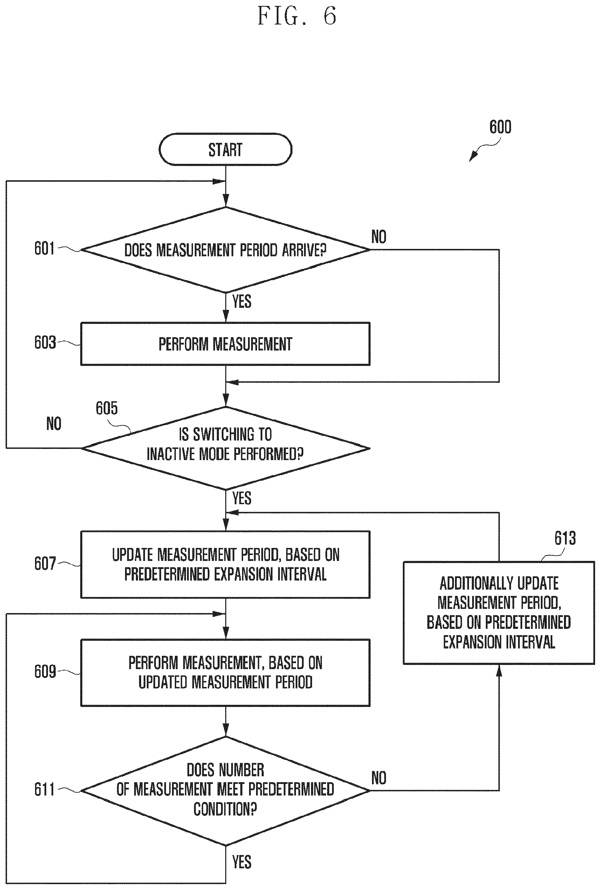

FIG. 6 is a flowchart 600 illustrating a process in which the electronic device updates measurement period, based on the inactive mode according to various embodiments. According to an embodiment, operations of FIG. 6 may be the detailed operation of operation 307 of FIG. 3. In the following embodiment, operations may be sequentially performed but the sequential performance is not necessary. For example, the order of operations may be changed, and at least two operations may be performed in parallel. For example, the electronic device of FIG. 6 may be the electronic device 101 of FIG. 1 or FIG. 2.

According to various embodiments referring to FIG. 6, when the electronic device 101 is in the active mode (for example, 'No' of operation 303 in FIG. 3), the electronic device (for example, the processor 120 of FIG. 1 or the processor 200 of FIG. 2) may identify whether measurement period in the RRC inactive state or the RRC idle state arrives in operation 601. For example, the measurement period may include first measurement period identified in channel-related information received from the network or second measurement period updated based on the paging period.

According to various embodiments, when the measurement period arrives (for example, `Yes' of operation 601), the electronic device (for example, the processor 120 or 200) may perform measurement in the RRC inactive state or the RRC idle state in operation 603. According to an embodiment, the communication processor 204 may periodically perform measurement in the RRC inactive state or the RRC idle state, based on the first measurement period (or the second measurement period) 450 as indicated by reference numerals 442 and 444 of FIG. 4B. For example, the measurement may include a series of operations for identifying the channel quality in an area in which the electronic device 101 is located. For example, the channel quality may include received signal strength indicator (RSSI), reference signal received quality (RSRQ), reference signal received power (RSRP), and/or signal to interference noise ratio (SINR).

According to various embodiments, when the electronic device (for example, the processor 120 or 200) performs measurement (for example, operation 603) or the measurement period does not arrive (for example, 'No' of operation 601), it may be identified whether the electronic device 101 switches to the inactive mode in operation 605. According to an embodiment, when receiving information related to switching to the sleep state from the application processor 202, the communication processor 204 may determine that the electronic device 101 switches to the inactive mode. According to an embodiment, when receiving information on switching to the inactive state of the display from the application processor 202, the communication processor 204 may determine that the electronic device 101 switches to the inactive mode.

According to various embodiments, when the electronic device 101 does not switch to the inactive mode (for example, 'No' of operation 605), the electronic device (for example, the processor 120 or 200) may identify whether the measurement period in the RRC inactive state or the RRC idle state arrives in operation 601.

According to various embodiments, when the electronic device 101 switches to the inactive mode (for example, `Yes' of operation 605), the electronic device (for example, the processor 120 or 200) may update (or expand) the measurement period in the RRC inactive state or the RRC idle state to the third measurement period, based on a predetermined expansion interval in operation 607. According to an embodiment, when it is determined that the electronic device 101 switched to the inactive mode as indicated by reference numeral 460, the communication processor 204 may update (or expand) the first measurement period (or the second measurement period) 450 in the RRC inactive state or the RRC idle state to the third measurement period, based on the predetermined expansion interval as indicated by reference numeral 470 of FIG. 4B.

According to various embodiments, the electronic device (for example, the processor 120 or 200) may periodically perform measurement in the RRC inactive state or the RRC idle state, based on the third measurement period in operation 609. According to an embodiment, the communication processor 204 may periodically perform measurement in the RRC inactive state or the RRC idle state, based on the updated third measurement period 470 based on the predetermined expansion interval as indicated by reference numeral 464 of FIG. 4B.

According to various embodiments, the electronic device (for example, the processor 120 or 200) may identify whether the periodic measurement number in the RRC inactive state or the RRC idle state based on the third measurement period meets a predetermined condition in operation 611. For example, the measurement number may include a successive measurement number in the RRC inactive state or the RRC idle state, based on the third measurement period 470.

According to various embodiments, when the periodic measurement number in the RRC inactive state or the RRC idle state based on the third measurement period meets the predetermined condition (for example, `Yes' of operation 611), the electronic device (for example, the processor 120 or 200) may periodically perform measurement in the RRC inactive state or the RRC idle state, based on the third measurement period in operation 609. For example, the state of meeting the predetermined condition may include a state in which the successive measurement number in the RRC inactive state or the RRC idle state based on the third measurement period is smaller than a predetermined number.

According to various embodiments, when the periodic measurement number in the RRC inactive state or the RRC idle state based on the third measurement period does not meet the predetermined condition (for example, 'No' of operation 611), the electronic device (for example, the processor 120 or 200) may additionally update (or expand) the third measurement period in the RRC inactive state or the RRC idle state, based on the predetermined expansion interval in operation 613. According to an embodiment, when the successive measurement number in the RRC inactive state or the RRC idle state based on the third measurement period 470 does not meet the predetermined condition, the communication processor 204 may additionally update the third measurement period 470 in the RRC inactive state or the RRC idle state, based on the predetermined expansion interval as indicated by reference numeral 472. For example, the third measurement period 470 may be additionally expanded based on the predetermined expansion interval as indicated by reference numeral 472. For example, the state in which the predetermined condition is not met may include a state in which the successive measurement number in the RRC inactive state or the RRC idle state based on the third measurement period is larger than or equal to the predetermined number.

According to various embodiments, the electronic device (for example, the processor 120 or 200) may periodically perform measurement in the RRC inactive state or the RRC idle state, based on the additionally updated third measurement period in operation 609. According to an embodiment, the communication processor 204 may periodically perform measurement in the RRC inactive state or the RRC idle state, based on the additionally updated third measurement period 472 based on the predetermined expansion interval as indicated by reference numeral 466 of FIG. 4B.

According to various embodiments, when the electronic device 101 is in the inactive mode, the electronic device (for example, the processor 120 or 200) may update (or expand) the measurement period, based on predetermined maximum measurement period. According to an embodiment, when the third measurement period updated (or expanded) based on the predetermined expansion interval is equal to shorter than the predetermined maximum measurement period, the communication processor 204 may additionally update (or expand) the third measurement period, based on the predetermined expansion interval. According to an embodiment, when the third measurement period updated (or expanded) based on the predetermined expansion interval is longer than the predetermined maximum measurement period, the communication processor 204 may configure the measurement period as the predetermined maximum measurement period.

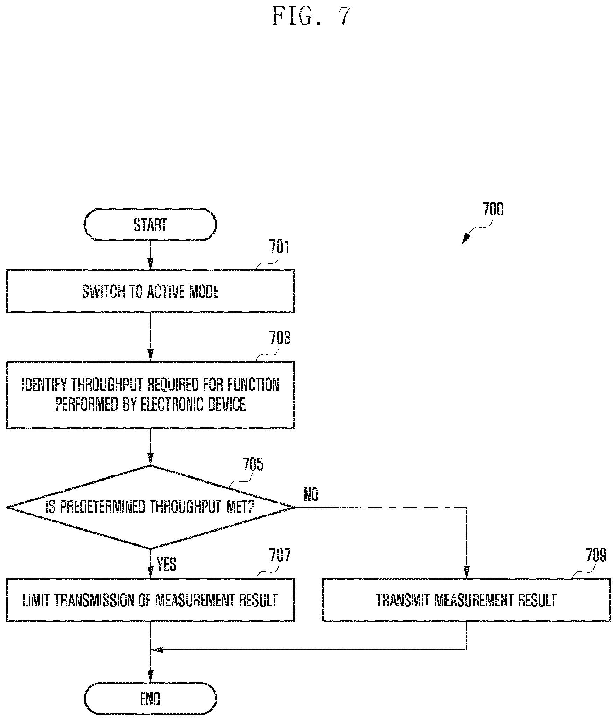

FIG. 7 is a flowchart 700 illustrating a process in which the electronic device selectively transmits a measurement result according to various embodiments. In the following embodiment, operations may be sequentially performed but the sequential performance is not necessary. For example, the order of operations may be changed, and at least two operations may be performed in parallel. For example, the electronic device of FIG. 7 may be the electronic device 101 of FIG. 1 or FIG. 2.

According to various embodiments referring to FIG. 7, the electronic device (for example, the processor 120 of FIG. 1 or the processor 200 of FIG. 2) may identify whether the electronic device 101 operating in the inactive mode switches to the active mode in operation 701. According to an embodiment, when receiving information related to switching to the active state from the application processor 202, the communication processor 204 may determine that the electronic device 101 switches to the active mode. According to an embodiment, when receiving information related to switching to the active state of the display from the application processor 202, the communication processor 204 may determine that the electronic device 101 switches to the active mode.

According to various embodiments, the electronic device (for example, the processor 120 or 200) may identify data throughput required by an application program (or function) executed in the electronic device 101 in operation 703. For example, the data throughput required by the application program may be included in information related to the application program stored in the memory 220 of the electronic device 101.

According to various embodiments, the electronic device (for example, the processor 120 or 200) may identify whether the data throughput required by the application program (or function) executed in the electronic device 101 meets predetermined throughput in operation 705. For example, the predetermined throughput may include reference throughput for determining whether to limit transmission of the measurement result.

According to various embodiments, when the data throughput required by the application program (or function) executed in the electronic device 101 meets the predetermined throughput (for example, `Yes' of operation 705), the electronic device (for example, the processor 120 or 200) may limit transmission of the measurement result in operation 707. According to an embodiment, when the data throughput required by the application program (or function) executed in application processor 202 meets the predetermined throughput, the communication processor 204 may determine that dual connectivity and/or a carrier aggregation scheme is not needed to provide a function related to the application program. Accordingly, the communication processor 204 may limit transmission of the measurement result made in the RRC inactive state or the RRC idle state. For example, the state in which the predetermined throughput is met may include a state in which the data throughput required by the application program (or function) executed by the application processor 202 is equal to or lower than the predetermined throughput. According to an embodiment, when the data throughput required by the application program (or function) executed in application processor 202 meets the predetermined throughput, the measurement period in the RRC inactive state or the RRC idle state may be configured (or maintained) as the third measurement period.

According to various embodiments, when the data throughput required by the application program (or function) executed in the electronic device 101 does not meet the predetermined throughput (for example, 'No' of operation 705), the electronic device (for example, the processor 120 or 200) may transmit the measurement result made in the RRC inactive state or the RRC idle state to the network in operation 709.

According to an embodiment, when the data throughput required by the application program (or function) executed in application processor 202 does not meet the predetermined throughput, the communication processor 204 may determine that dual connectivity and/or a carrier aggregation scheme is needed to provide a function related to the application program. Accordingly, the communication processor 204 may determine transmission of the measurement result made in the RRC inactive state or the RRC idle state. For example, when receiving a request message related to the measurement result from the network through the communication circuit 210, the communication processor 204 may control the communication circuit 210 to transmit the measured result in the RRC inactive state or the RRC idle state to the network. For example, the request message may be received while being inserted into a message related to RRC resumption (RRC resume). For example, the measurement result may be transmitted to the network while being inserted into a message related to completion of RRC resumption (RRC resume complete). For example, result measured in the RRC inactive state or the RRC idle state may include the more recently made measurement result or the measurement result made before a predetermined time from a time point at which the request message is received. For example, the state in which the predetermined throughput is not met may include the state in which the data throughput required by the application program (or function) executed by the application processor 202 is larger than the predetermined throughput and/or the state in which the data throughput required by the application program (or function) executed by the application processor 202 cannot be identified.

According to an embodiment, when the data throughput required by the application program (or function) executed in application processor 202 does not meet the predetermined throughput, the communication processor 204 may periodically perform measurement, based on first measurement period or second measurement period in the RRC inactive state or the RRC idle state.

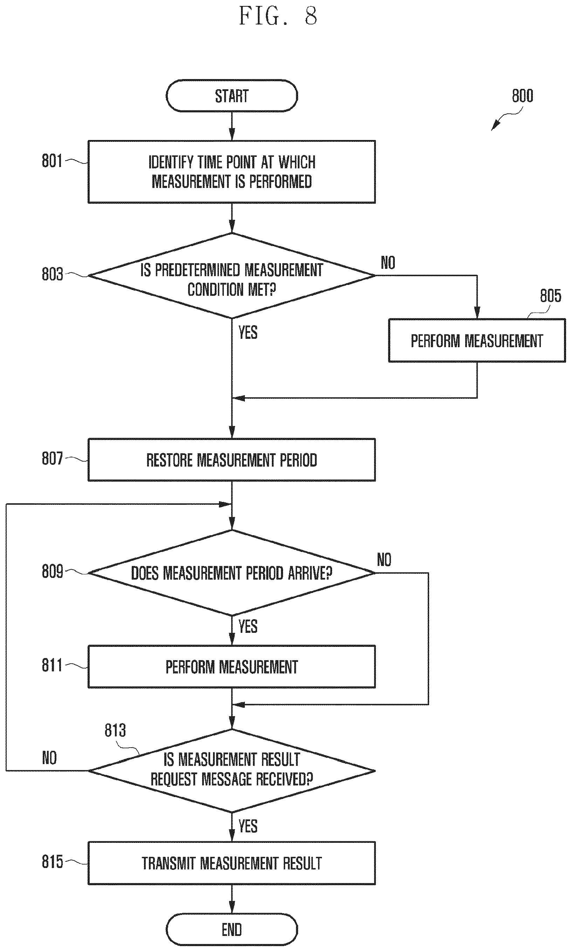

FIG. 8 is a flowchart 800 illustrating a process in which the electronic device transmits a measurement result according to various embodiments. According to an embodiment, operations of FIG. 8 may be the detailed operation of operation 709 of FIG. 7. In the following embodiment, operations may be sequentially performed but the sequential performance is not necessary. For example, the order of operations may be changed, and at least two operations may be performed in parallel. For example, the electronic device of FIG. 8 may be the electronic device 101 of FIG. 1 or FIG. 2.

According to various embodiments referring to FIG. 8, when the data throughput required by the application program (or function) executed in the electronic device 101 does not meet the predetermined throughput (for example, 'No' of operation 705 in FIG. 7), the electronic device (for example, the processor 120 of FIG. 1 or the processor 200 of FIG. 2) may identify a time point at which the last measurement is performed in the RRC inactive state or the RRC idle state in operation 801.

According to various embodiments, the electronic device (for example, the processor 120 or 200) may identify whether the time point at which the last measurement is performed in the RRC inactive state or the RRC idle state meets a predetermined measurement condition in operation 803.

According to various embodiments, when the time point at which the last measurement is performed in the RRC inactive state or the RRC idle state meets the predetermined measurement condition (for example, `Yes' of operation 803), the electronic device (for example, the processor 120 or 200) may perform measurement in operation 805. For example, a state in which the predetermined measurement condition is met may include a state in which a time interval from a time point (or the current time) at which the time point at which the last measurement is performed is identified to a time point at which the last measurement is performed in the RRC inactive state or the RRC idle state is longer than the first measurement period (or the second measurement period).

According to various embodiments, when the time point at which the last measurement is performed in the RRC inactive state or the RRC idle state does not meet the predetermined measurement condition (for example, 'No' of operation 803) or the measurement is performed (for example, operation 805), the electronic device (for example, the processor 120 or 200) may restore the measurement period to the first measurement period (or the second measurement period) in operation 807. For example, a state in which the predetermined measurement condition is met may include a state in which a time interval from a time point (or the current time) at which the time point at which the last measurement is performed is identified to a time point at which the last measurement is performed in the RRC inactive state or the RRC idle state is equal to or shorter than the first measurement period (or the second measurement period).

According to various embodiments, the electronic device (for example, the processor 120 or 200) may identify whether the restored first measurement period (or second measurement period) arrives in operation 809.

According to various embodiments, when the measurement period arrives (for example, `Yes' of operation 809), the electronic device (for example, the processor 120 or 200) may perform measurement in the RRC inactive state or the RRC idle state in operation 811. For example, the measurement may include a series of operations for identifying the channel quality in an area in which the electronic device 101 is located. For example, the channel quality may include RSSI, RSRQ, RSRP, and/or SINR.

According to various embodiments, when the measurement is performed (for example, operation 811) or the measurement period does not arrive (for example, 'No' of operation 809), the electronic device (for example, the processor 120 or 200) may identify whether a request message related to the measurement result is received from the network in operation 813. For example, the request message may be included in a message related to RRC resumption (RRC resume).

According to various embodiments, when the request message related to the measurement result is not received from the network (for example, 'No' of operation 813), the electronic device (for example, the processor 120 or 200) may identify whether the restored first measurement period (or second measurement period) arrives in operation 809.

According to various embodiments, when the request message related to the measurement result is received from the network (for example, `Yes' of operation 813), the electronic device (for example, the processor 120 or 200) may transmit the measurement result made in the RRC inactive state or the RRC idle state to the network in operation 815. According to an embodiment, when the request message related to the measurement result is received from the network, the communication processor 204 may control the communication circuit 210 to transmit the measurement result made in the RRC inactive state or the RRC idle state to the network. For example, the measurement result may be transmitted to the network while being inserted into a message related to completion of RRC resumption (RRCresumecomplete). For example, the measurement result may include a measurement result made most recently in the RRC inactive state or the RRC idle state or a measurement result made before a predetermined time from a time point at which the request message is received.

According to various embodiments, a method of operating an electronic device (for example, the electronic device 101 of FIG. 1 or FIG. 2) may include an operation of identifying measurement period in a radio resource control (RRC) inactive state or an RRC idle state from a control message received from an external device, an operation of identifying an operation mode of the electronic device, and an operation of updating the measurement period when it is determined that the operation mode of the electronic device is an inactive mode.

According to various embodiments, the operation of identifying the measurement period may include an operation of identifying measurement period in the RRC inactive state or the RRC idle state in a message related to RRC release or a system information block received from the external device.

According to various embodiments, the operation of identifying the operation mode may include an operation of, when an application processor (for example, the main processor 121 of FIG. 1 or the application processor (AP) 202 of FIG. 2) of the electronic device is in a sleep state, determining that the operation mode of the electronic device is the inactive mode.

According to various embodiments, the operation of identifying the operation mode may include an operation of, when a display of the electronic device is in an inactive state, determining that the operation mode of the electronic device is the inactive mode.

According to various embodiments, the operation of updating the measurement period may include an operation of, when it is determined that the operation mode of the electronic device is the inactive mode, updating the measurement period to not perform measurement in the inactive mode of the electronic device.

According to various embodiments, the operation of identifying the paging period of the electronic device may further include an operation of updating the measurement period to at least partially overlap the paging period.

According to various embodiments, the operation of updating the measurement period may include an operation of, when it is determined that the operation mode of the electronic device is the inactive mode, additionally updating the measurement period updated to at least partially overlap the paging period, based on a predetermined interval.

According to various embodiments, the method may further include an operation of, when the operation mode of the electronic device switches to an active mode, identifying data throughput required by an application program executed in the electronic device, and an operation of, when the data throughput required by the application program executed in the electronic device meets predetermined throughput, limiting transmission of a measurement result in the RRC inactive state or the RRC idle state.

According to various embodiments, the method may further include an operation of, when the data throughput required by the application program executed in the electronic device does not meet the predetermined throughput, transmitting the measurement result in the RRC inactive state or the RRC idle state to the external device.

According to various embodiments, the method may further include an operation of, when it is determined that the operation mode of the electronic device is an active mode, periodically perform measurement in the RRC inactive state or the RRC idle state, based on the measurement period.

Embodiments of the disclosure in the specification and the drawings are presented as specific examples to easily describe the technical content according to the embodiment of the disclosure and help for understanding of the embodiments of the disclosure, and do not intent to limit the scope of the embodiments of the disclosure. Accordingly, it should be construed that not only the embodiments disclosed herein but also all modifications or modified forms derived from the technical ides of various embodiments of the disclosure are included in the scope of the various embodiments of the disclosure.

## Claims

1. An electronic device comprising:
a communication circuit; and
a processor operatively connected to the communication circuit,
wherein the processor is configured to:
identify measurement period in a radio resource control (RRC) inactive state or an RRC idle state from a control message received from an external device through the communication circuit;
identify an operation mode of the electronic device; and
update the measurement period in case that it is determined that the operation mode of the electronic device is an inactive mode.

2. The electronic device of claim 1, wherein the measurement period is included in a message related to RRC release or a system information block received from the external device through the communication circuit.

3. The electronic device of claim 1, further comprising an application processor, wherein the processor is configured to determine that the operation mode of the electronic device is the inactive mode in case that the application processor is in a sleep state.

4. The electronic device of claim 1, further comprising a display, wherein the processor is configured to determine that the operation mode of the electronic device is the inactive mode in case that the display is in an inactive state.

5. The electronic device of claim 1, wherein the processor is configured to, in case that it is determined that the operation mode of the electronic device is the inactive mode, update the measurement period to not perform measurement in the inactive mode of the electronic device.

6. The electronic device of claim 1, wherein the processor is configured to:
identify a paging period of the electronic device; and
update the measurement period to at least partially overlap the paging period.

7. The electronic device of claim 6, wherein the processor is configured to, in case that it is determined that the operation mode of the electronic device is the inactive mode, additionally update the measurement period updated to at least partially overlap the paging period, based on a predetermined interval.

8. The electronic device of claim 1, wherein the processor is configured to:
in case that the operation mode of the electronic device switches to an active mode, identify data throughput required by an application program executed in the electronic device; and
in case that data throughput required by an application program executed in the electronic device meets predetermined throughput, limit transmission of a measurement result in the RRC inactive state or the RRC idle state.

9. The electronic device of claim 8, wherein the processor is configured to, in case that the data throughput required by the application program executed in the electronic device does not meet the predetermined throughput, transmit the measurement result in the RRC inactive state or the RRC idle state to the external device.

10. A method of operating an electronic device, the method comprising:
identifying measurement period in a radio resource control (RRC) inactive state or an RRC idle state from a control message received from an external device;
identifying an operation mode of the electronic device; and
updating the measurement period in case that it is determined that the operation mode of the electronic device is an inactive mode.

11. The method of claim 10, wherein the identifying of the measurement period comprises identifying measurement period in the RRC inactive state or the RRC idle state in a message related to RRC release or a system information block received from the external device.

12. The method of claim 10, wherein the identifying of the operation mode comprises, in case that an application processor of the electronic device is in a sleep state or a display of the electronic device is in an inactive state, determining that the operation mode of the electronic device is the inactive mode.

13. The method of claim 10, wherein the updating of the measurement period comprises, in case that it is determined that the operation mode of the electronic device is the inactive mode, updating the measurement period to not perform measurement in the inactive mode of the electronic device.

14. The method of claim 10, further comprising:
identifying a paging period of the electronic device; and
updating the measurement period to at least partially overlap the paging period,
wherein the updating of the measurement period comprises, in case that it is determined that the operation mode of the electronic device is the inactive mode, additionally updating the measurement period updated to at least partially overlap the paging period, based on a predetermined interval.

15. The method of claim 10, further comprising:
in case that the operation mode of the electronic device switches to an active mode, identifying data throughput required by an application program executed in the electronic device;
in case that the data throughput required by the application program executed in the electronic device meets predetermined throughput, limiting transmission of a measurement result in the RRC inactive state or the RRC idle state; and
in case that the data throughput required by the application program executed in the electronic device does not meet the predetermined throughput, transmitting the measurement result in the RRC inactive state or the RRC idle state to the external device.
